# EUROPEAN PATENT APPLICATION

(11) **EP 4 848 750 A1**
(43) Date of publication of application: **02.12.2026**
(21) Application number: 25757811.2
(22) Date of filing: 20.02.2025
(51) Int. Cl.: H04Q 11/00, H04J 14/02, H04B 10/40

(54) **SERVICE SENDING METHOD FOR OPTICAL LINE TERMINAL**

(30) Priority: 23.02.2024 CN 202410204370
(71) Applicant: ZTE CORPORATION, Shenzhen, Guangdong 518057 (CN)
(72) Inventor: ZHANG, Weiliang, Shenzhen, Guangdong 518057 (CN); LIU, Bo, Shenzhen, Guangdong 518057 (CN); HUANG, Xingang, Shenzhen, Guangdong 518057 (CN)
(74) Representative: Chimini, Francesco
(86) International application number: PCT/CN2025/078318
(87) International publication number: WO 2025/176177

(57) **Abstract**

Embodiments of the present disclosure provide a service sending method for an optical line terminal (OLT), which is applied to an OLT. The method comprises: sending a downlink service in a predetermined time period within a preset cycle, and stopping sending the downlink service outside the predetermined time period within the preset cycle.

## Description

### Cross-Reference to Related Application

The present disclosure is based on and claims priority to Chinese Patent Application No. CN202410204370.0, titled "Service Sending Method for Optical Line Terminal", filed on February 23, 2024, the entire content of which is incorporated herein by reference.

### Technical Field

Embodiments of the present disclosure relate to the field of optical communications, and specifically to a service sending method for an optical line terminal.

### Background

A Passive Optical Network (PON) system includes an Optical Line Terminal (OLT) and multiple Optical Network Units (ONUs) connected to the OLT via an Optical Distribution Network (ODN). In an International Telecommunication Union Telecommunication Standardization Sector (ITU-T) PON system, the OLT continuously sends superframes to the ONUs in the downstream direction. Even when there is no data to send, the OLT continues to send idle data.

Under the background of global carbon neutrality, operators are beginning to focus on the power consumption of equipment in central office rooms. OLT equipment in central office rooms still operates at full speed when the downstream traffic is low or nonexistent, resulting in unnecessary power consumption.

Regarding the problem of unnecessary power consumption in downstream transmission of an OLT, no effective solutions have been proposed in the related art.

### Summary

The embodiments of the present disclosure provide a service sending method for an OLT, which may at least solve the problem of unnecessary power consumption in downstream transmission of an OLT in the related art.

According to an embodiment of the present disclosure, there is provided a service sending method for an OLT. The method is applied to the OLT and includes:
sending a downstream service during a predetermined time period within a preset cycle, and stopping the sending of the downstream service outside the predetermined time period within the preset cycle.

According to another embodiment of the present disclosure, there is provided a service sending method for an OLT. The method is applied to an ONU and includes:
processing a downstream service during a predetermined time period within a preset cycle, the processing including at least one of: restoring local downstream receiving-related components, maintaining a downstream synchronization state, recovering a downstream clock, or receiving the downstream service.

According to yet another embodiment of the present disclosure, there is further provided a computer-readable storage medium, wherein a computer program is stored in the computer-readable storage medium, and the computer program is configured to, when executed, perform the operations in any one of the foregoing method embodiments.

According to yet another embodiment of the present disclosure, there is further provided an electronic apparatus, including a memory and a processor, wherein a computer program is stored in the memory, and the processor is configured to run the computer program to perform the operations in any one of the foregoing method embodiments.

### Brief Description of the Drawings

Fig. 1 is a schematic diagram of downstream framing and frame sending in an OLT in the related art;
Fig. 2 is a schematic diagram of the structure of a Physical Synchronization Block for downstream (PSBd) in the related art;
Fig. 3 is a block diagram of a hardware structure of a computer terminal for implementing a service sending method for an OLT according to an embodiment of the present disclosure;
Fig. 4 is a first flowchart of a service sending method for an OLT according to an embodiment of the present disclosure;
Fig. 5 is an overall architecture diagram of a service sending method for an OLT according to an embodiment of the present disclosure;
Fig. 6 is a flowchart of sending a downstream service during a predetermined time period within a preset cycle and stopping the sending of the downstream service outside the predetermined time period within the preset cycle according to an embodiment of the present disclosure;
Fig. 7 is a flowchart of entering a power saving mode according to an embodiment of the present disclosure;
Fig. 8 is a schematic diagram of a downstream Bandwidth Map (dBWmap) according to an embodiment of the present disclosure;
Fig. 9 is a schematic diagram of entering an entire-superframe power saving mode according to an embodiment of the present disclosure;
Fig. 10 is a flowchart of entering an entire-superframe power saving mode according to an embodiment of the present disclosure;
Fig. 11 is a schematic diagram of entering a superframe-tail power saving mode according to an embodiment of the present disclosure;
Fig. 12 is a flowchart of entering a superframe-tail power saving mode according to an embodiment of the present disclosure;
Fig. 13 is a schematic diagram of entering an intra-superframe power saving mode according to an embodiment of the present disclosure;
Fig. 14 is a flowchart of entering an intra-superframe power saving mode according to an embodiment of the present disclosure; and
Fig. 15 is a second flowchart of a service sending method for an OLT according to an embodiment of the present disclosure.

### Detailed Description of the Embodiments

The embodiments of the present disclosure will be described in detail below with reference to the accompanying drawings.

It should be noted that the terms "first," "second," and the like in the specification, claims, and drawings of the present disclosure are used for distinguishing similar objects and are not necessarily intended to describe a specific order or sequence.

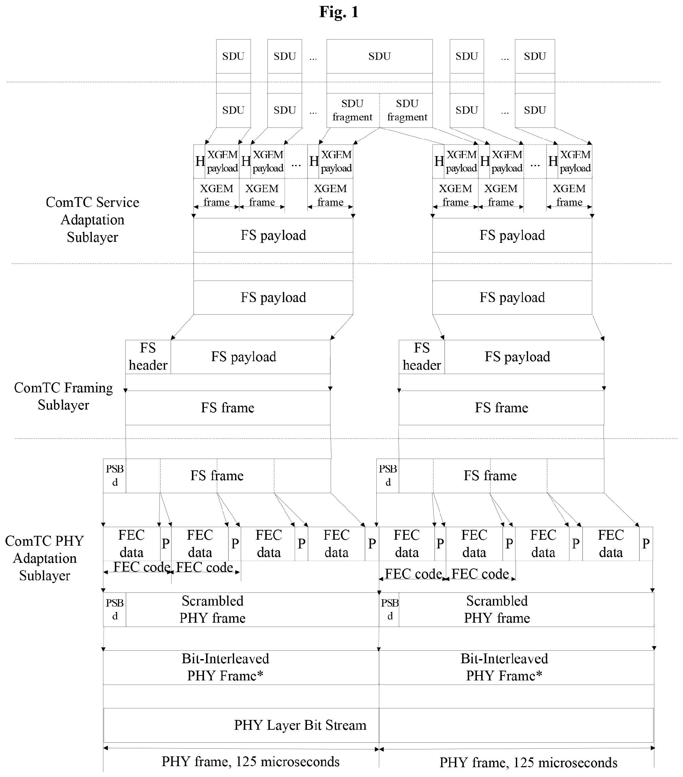

Fig. 1 is a schematic diagram of downstream framing and frame sending in an OLT in the related art. As shown in Fig. 1, a Service Data Unit (SDU) or an SDU fragment is encapsulated into an X Gigabit Passive Optical Network Encapsulation Method (XGEM) frame. A series of XGEM frames are further encapsulated into a Framing Sublayer (FS) frame. Then, a Physical Synchronization Block for downstream (PSBd) is added, and Forward Error Correction (FEC) is inserted. The resulting data is scrambled, and bit interleaving may be performed if required, thereby forming a physical (PHY) frame to be transmitted. A PHY frame typically has a cycle of 125 microseconds. Since each PHY frame contains multiple XGEM frames, the PHY frame may also be referred to as a superframe. When the amount of service data is small, idle data is usually inserted to form a complete superframe. In this process, scrambling starts from the first bit following the PSBd and restarts at the beginning of the next superframe. Bit interleaving is performed on a unit of four FEC code blocks.

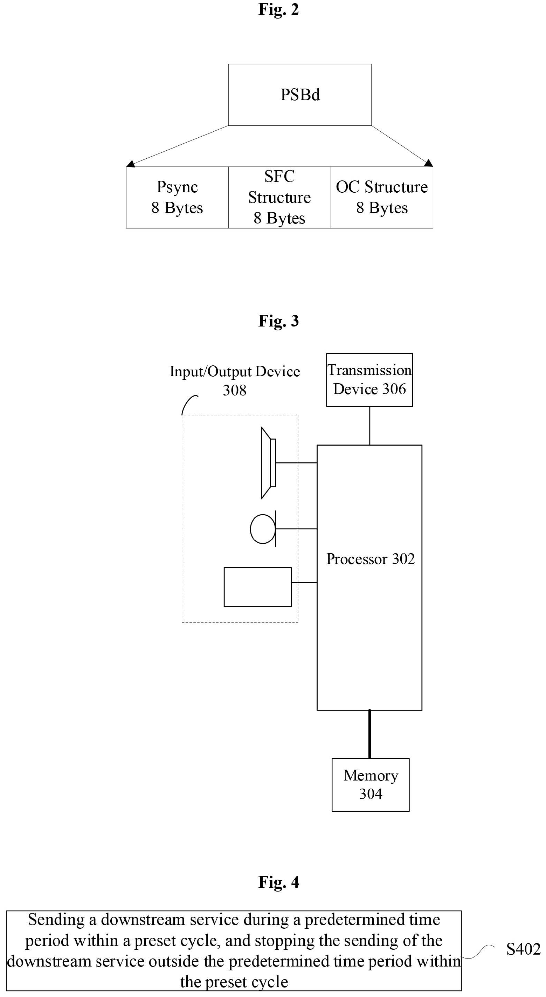

Fig. 2 is a schematic diagram of the structure of a PSBd in the related art. As shown in Fig. 2, the PSBd includes a Physical Layer Synchronization (PSync) field, a Super Frame Counter (SFC) field, and an Operation Control (OC) field. The PSync, which is 8 bytes in length, indicates the start of a superframe. An ONU receiver relies on the PSync to identify the start of the superframe. To accurately identify the PSync, the ONU needs to maintain a local PSync state machine. Data is received only when the PSync state machine is in a synchronized state; otherwise, data reception is disabled.

The method embodiments provided in the embodiments of the present disclosure may be executed in a computer terminal or similar computing apparatus. Taking execution on a computer terminal as an example, Fig. 3 is a block diagram of a hardware structure of a computer terminal for implementing a service sending method for an OLT according to an embodiment of the present disclosure. As shown in Fig. 3, the computer terminal may include one or more processors 302 (only one is shown in Fig. 3; the processor 302 may include, but is not limited to, a Microcontroller Unit (MCU), a Field Programmable Gate Array (FPGA), or other processing devices) and a memory 304 for storing data. The computer terminal may further include a transmission device 306 for communication functions and an input/output device 308. It should be understood by those having ordinary skill in the art that the structure shown in Fig. 3 is merely illustrative and does not limit the structure of the computer terminal. For example, the computer terminal may include more or fewer components than those shown in Fig. 3, or have a configuration different from that shown in Fig. 3.

The memory 304 may be configured to store a computer program, for example, a software program and modules of an application program, such as the computer program corresponding to the service sending method for an OLT according to the embodiments of the present disclosure. The processor 302 executes various functional applications and data processing by running the computer program stored in the memory 304, thereby implementing the methods described above. The memory 304 may include a high-speed random access memory. Further, the memory 304 may include a non-volatile memory, such as one or more magnetic storage devices, flash memories, or other non-volatile solid-state memories. In some examples, the memory 304 may further include memories remotely arranged relative to the processor 302. These remote memories may be connected to the computer terminal via a network. Examples of such networks include, but are not limited to, the Internet, an intranet, a local area network, a mobile communication network, and any combination thereof.

The transmission device 306 is configured to receive or send data via a network. A specific example of the network may include a wireless network provided by a communication service provider of the computer terminal. In one example, the transmission device 306 includes a Network Interface Controller (NIC) that can be connected to other network devices via a base station to communicate with the Internet. In one example, the transmission device 306 may be a Radio Frequency (RF) module configured to communicate with the Internet in a wireless manner.

The present embodiment provides a service sending method for an OLT, which is run on the aforementioned computer terminal. Fig. 4 is a first flowchart of a service sending method for an OLT according to an embodiment of the present disclosure. As shown in Fig. 4, the flow includes the following operation S402.

In operation S402, a downstream service is sent during a predetermined time period within a preset cycle, and the sending of the downstream service is stopped outside the predetermined time period within the preset cycle.

Through the embodiments of the present disclosure, stopping the sending of the downstream service outside the predetermined time period within the preset cycle can save the power consumption of downstream transmission of the OLT outside the predetermined time period within the preset cycle, thereby reducing the overall power consumption of the OLT during the entire downstream transmission process. This solves the problem of unnecessary power consumption in downstream transmission of an OLT in the related art and achieves the effect of OLT power saving.

Meanwhile, sending the downstream service during the predetermined time period within the preset cycle ensures that, when there is no downstream service or the traffic of the downstream service is low, appropriate configuration of the preset cycle and the predetermined time period will not affect the transmission of the downstream service while achieving the OLT power saving effect. Thus, both guaranteed downstream service transmission and OLT power saving can be achieved simultaneously.

In this embodiment, stopping the sending of the downstream service outside the predetermined time period within the preset cycle includes: turning off local downstream sending-related components outside the predetermined time period within the preset cycle, or controlling the local downstream sending-related components to enter a power saving state outside the predetermined time period within the preset cycle.

In the embodiments of the present disclosure, the local downstream sending-related components include at least one of: a Medium Access Controller (MAC) component of a data link layer, a Digital Signal Processor (DSP) component, a Serializer/Deserializer (SERDES) component, a Physical Layer (PHY) component, or an optical device component.

Turning off the local downstream sending-related components or controlling the local downstream sending-related components to enter the power saving state outside the predetermined time period within the preset cycle can reduce the power consumption of the local downstream sending-related components for downstream transmission outside the predetermined time period within the preset cycle, thereby lowering overall power consumption of the OLT during the entire downstream transmission process and achieving the effect of OLT power saving.

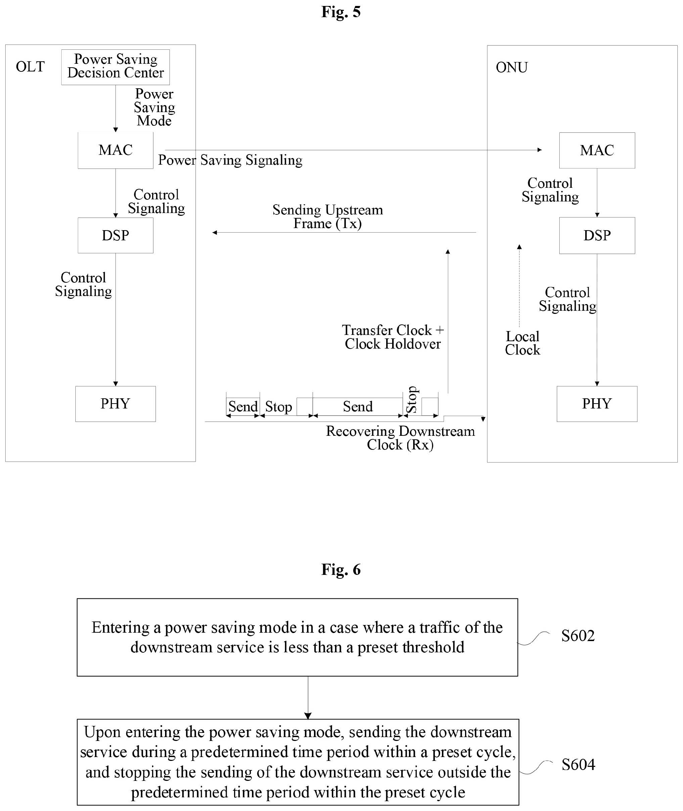

Fig. 5 is an overall architecture diagram of a service sending method for an OLT according to an embodiment of the present disclosure. As shown in Fig. 5, an OLT power saving decision center determines the magnitude of the traffic of the downstream service, determines a power saving mode based on the magnitude, and notifies, via internal control signaling, components such as the MAC, DSP, and PHY to enter a power saving state when the sending of the downstream service is stopped and to promptly resume normal operation when service resumes. Meanwhile, the MAC notifies the ONU MAC of the power saving mode. The ONU MAC then informs components such as the DSP and PHY via internal control signaling, enabling these components to be aware of the suspension and resumption of downstream service and to promptly perform operations to suspend and resume service reception. The ONU acquires a downstream clock through downstream service transmission and uses this downstream clock for upstream sending. During the suspension of downstream service, the ONU may switch its upstream sending clock to a holdover state or may use a local clock. To simplify clock processing on the ONU side and prevent frequent clock switching, the ONU may enter the holdover state immediately upon entering the power saving mode. Additionally, the OLT may perform periodic transmission that lasts for a duration to allow the ONU to recover the downstream clock. On the OLT side, a First-In-First-Out (FIFO) buffer may be configured to absorb a deviation between the local clock of the OLT and the upstream sending clock of the ONU.

Fig. 6 is a flowchart of sending a downstream service during a predetermined time period within a preset cycle and stopping the sending of the downstream service outside the predetermined time period within the preset cycle according to an embodiment of the present disclosure. As shown in Fig. 6, the flow includes the following operations S602 and S604.

In operation S602, a power saving mode is entered in a case where a traffic of the downstream service is less than a preset threshold.

In this embodiment, before operation S602, the method further includes: configuring a First-In-First-Out (FIFO) buffer, wherein the FIFO buffer is configured to adjust a deviation between a local clock and an upstream sending clock of an Optical Network Unit (ONU).

The ONU acquires the downstream clock by receiving downstream service data and uses this clock for upstream sending. When the OLT stops sending the downstream service, the ONU cannot receive downstream service data and thus cannot acquire the downstream clock through reception. Therefore, during the time period when the OLT stops sending the downstream service, the ONU enters a clock holdover state and uses the clock in the holdover state or a local clock for upstream sending. At this time, the FIFO buffer configured on the OLT side is used to adjust the deviation between the local clock and the upstream sending clock of the ONU.

In this embodiment, the method further includes: determining a power saving time period or a power saving ratio based on a magnitude of the traffic of the downstream service, wherein the power saving time period is a time period outside the predetermined time period within the preset cycle, and the power saving ratio is a ratio of the power saving time period to the preset cycle. The operation of determining the power saving time period based on the magnitude of the traffic of the downstream service may include: determining the predetermined time period based on the magnitude of the traffic of the downstream service, wherein the power saving time period equals the preset cycle minus the predetermined time period.

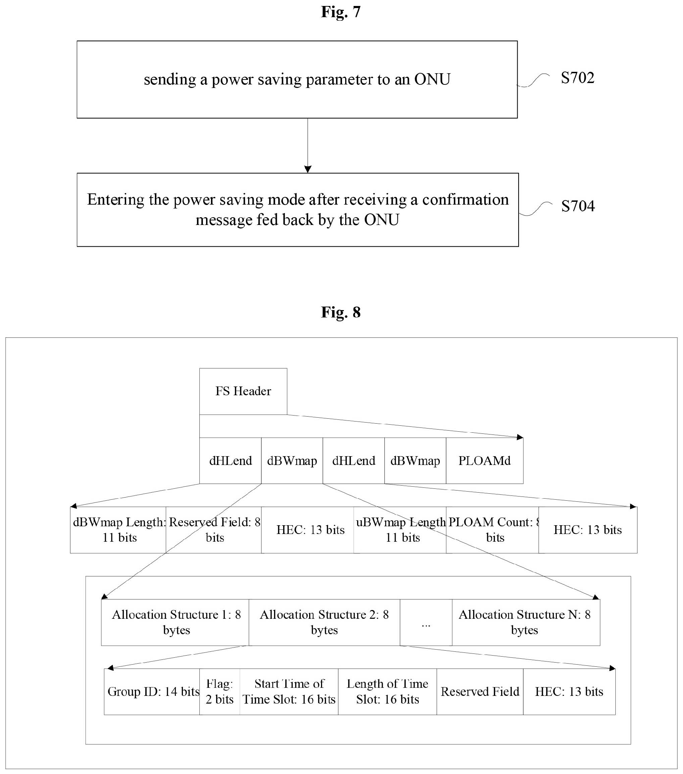

Fig. 7 is a flowchart of entering a power saving mode according to an embodiment of the present disclosure. As shown in Fig. 7, the flow includes the following operations S702 and S704.

In operation S702, a power saving parameter is sent to an ONU.

The power saving parameter includes the preset cycle and further includes at least one of the power saving time period or the power saving ratio. The power saving time period may alternatively be represented by the predetermined time period; upon reception, the ONU may derive the power saving time period by subtracting the predetermined time period from the preset cycle.

The power saving mode may include one of: an entire-superframe power saving mode, a superframe-tail power saving mode, or an intra-superframe power saving mode.

The Power Saving Mode (PSM) is denoted as PSM(T, P/p), where T represents a power saving cycle, P represents a power saving ratio or a sending ratio, and p represents a power saving time period or a sending time period. Besides being expressed in time units, p may also be expressed in terms of a number of bits, bytes, or Forward Error Correction (FEC) code blocks corresponding to a rate within the respective time period. Here, P and/or p are/is optional. Generally, data and signaling are sent by default in an earlier time period of each T cycle, while power saving is performed in a later time period of the T cycle. Table 1 provides exemplary descriptions of the three power saving modes and corresponding power saving parameters.

**Table 1**

| PSM | T | P | p |
|---|---|---|---|
| Intra-superframe power saving | 31.25µs, 62.5µs | 30%, 60%, 90% | 10µs, 20µs, 30µs |
| Superframe-tail power saving | 125µs | 30%, 60%, 90% | 30µs, 60µs, 90µs |
| Entire-superframe power saving | 250µs, 500µs, 1000µs, 2000µs | 25%, 50%, 75% | 100µs, 200µs, 300µs |

For example, in the intra-superframe power saving mode, T is 31.25 µs, and p is selected as a parameter, e.g., 10 µs. By default, data and signaling are sent in an earlier time period of T. If p represents a sending time period, the OLT sends a downstream service during the first 10 µs of the 31.25 µs cycle and stops sending the downstream service during the remaining 21.25 µs of the 31.25 µs cycle. If p represents a power saving time period, the OLT sends the downstream service during the first 21.25 µs of the 31.25 µs cycle and stops sending the downstream service during the remaining 10 µs of the 31.25 µs cycle. The remaining parameters follow by analogy. Selection of P as a parameter is similar and will not be described herein for brevity.

The number of FEC code blocks may be implemented by the OLT via configuration of a register. For example, a 2-bit register is configured to indicate the power saving ratio, which may be set to 00, 01, 11, or 10, wherein 00 indicates 0% (i.e., no power saving), 01 indicates 30% power saving, 10 indicates 60% power saving, and 11 indicates 90% power saving.

In operation S702 above, sending the power saving parameter to the ONU involves information exchange between the OLT and the ONU.

In this embodiment, the OLT and the ONU perform information exchange via one of the following channels: Optical Network Unit Management and Control Interface (OMCI), Physical Layer Operation, Administration, and Maintenance (PLOAM), or Downstream Bandwidth Map (dBWmap). OMCI and PLOAM are slow channels, while dBWmap is a fast channel and may be used to indicate to the ONU a stop-sending position within a specified superframe.

The information exchange may be used for the OLT to confirm entry into the power saving mode, configure a FIFO buffer, and select a local optical module clock. The information exchange may be used for the ONU to enter the power saving mode and configure an upstream sending clock. Specifically, the information exchange may include: the OLT sending the power saving parameter to the ONU, and receiving a confirmation message fed back by the ONU.

In this embodiment, operation S702 may specifically include: sending the power saving parameter to the ONU via one of the following channels: OMCI, PLOAM, or dBWmap.

Table 2 is an exemplary table of PLOAM messages. A PLOAM message example is shown in Table 2. A power saving time period or power saving ratio of 0 indicates a non-power-saving mode or a normal working mode, while a power saving time period or power saving ratio with a non-zero value indicates a power saving mode. Optionally, an additional indication bit may be added. For example, an indication bit with a bit value of 0 indicates the normal working mode, and an indication bit with a bit value of 1 indicates the power saving mode.

**Table 2**

| Octet | Content | Description |
|---|---|---|
| 1-2 | ONU ID | Identifier of the ONU, e.g., ONU ID=0x03FF, may serve as a broadcast message |
| 3 | Message Type ID | Identifier for power saving, e.g., Message Type ID=0x20 indicates OLT power saving |
| 4 | Sequence Number (SeqNo) | Indicates an 8-bit PLOAM sequence number, may serve as a broadcast message |
| 5 | Control Flag | Control Flag=0000 000A, wherein: |
| | | A=0: Octets 11-14 indicate power saving time period. |
| | | A=1: Octets 11-14 indicate power saving ratio. |
| | | Other values are reserved. |
| 6-10 | Power Saving Cycle | Indicates a calculation cycle for the power saving mode |
| 11-14 | Power Saving Time period/Ratio | Power saving time period or power saving ratio at the tail of each power saving cycle |
| 15-40 | Padding | Transmitter sets to 0x00; receiver treats as ignored |
| 41-48 | Message Integrity Check (MIC) | Used for message integrity check. Calculated using a default PLOAM_IK in case of a broadcast message, or using an ONU-specific derived shared PLOAM_IK in case of a directed message |

Fig. 8 is a schematic diagram of a downstream Bandwidth Map (dBWmap) according to an embodiment of the present disclosure. As shown in Fig. 8, a header of an existing FS frame is modified to add a downstream Hybrid Length (dHLend) field and a dBWmap field. The dHLend field indicates a number of allocation structures in the dBWmap. Each allocation structure in the dBWmap includes a Group ID, a Flag, a Start Time, a Grant Size, a Reserved field, and a Header Error Control (HEC) field. The Group ID indicates an identifier of a downstream allocation, and the ID may be set to increment sequentially. Alternatively, the Group ID may indicate an identifier such as an ONU-ID. Flag=00b indicates that the OLT does not send within a corresponding time slot; Flag=01b indicates that the OLT sends a downstream service within the corresponding time slot. The HEC is used for hybrid error correction checking.

After sending the power saving parameter to the ONU via the above channel, the ONU feeds back a message to the OLT via the above channel. For example, the ONU sends a confirmation PLOAM message to the OLT to acknowledge receipt of the power saving PLOAM message sent by the OLT.

In operation S704, the power saving mode is entered after receiving the confirmation message fed back by the ONU.

In operation S604, upon entering the power saving mode, the downstream service is sent during the predetermined time period within the preset cycle, and the sending of the downstream service is stopped outside the predetermined time period within the preset cycle.

Specifically, upon entering the power saving mode, in the first cycle, the OLT activates local downstream sending-related components to send the downstream service during the predetermined time period. Subsequently, the OLT turns off the local downstream sending-related components or controls the local downstream sending-related components to enter a power saving state to stop sending the downstream service outside the predetermined time period. In the next cycle, the OLT resumes operation of the local downstream sending-related components to send the downstream service during the predetermined time period, then turns off the local downstream sending-related components or switches the local downstream sending-related components to the power saving state to stop sending outside the predetermined time period. This process is repeated until the power saving mode is exited.

Upon entering the power saving mode, the local downstream sending-related components of the OLT need to recover from a turned-off state or a power saving state to a working state in each cycle. However, the OLT stops sending the downstream service during a later time period of a previous cycle; consequently, the ONU cannot acquire the downstream service during such later time period and thus cannot acquire synchronization information from the downstream service. Therefore, enabling the ONU to acquire accurate synchronization information is a key technical problem.

In an embodiment, stopping the sending of the downstream service outside the predetermined time period within the preset cycle includes:
sending a recovery block at a tail of a time period outside the predetermined time period within the preset cycle, and stopping the sending of the downstream service during a remaining portion of the time period outside the predetermined time period within the preset cycle, wherein the recovery block is used by an Optical Network Unit (ONU) to recover a downstream clock.

The recovery block is further used for at least one of: locking a gain of a Transimpedance Amplifier (TIA), performing equalization training, or searching for physical layer synchronization on the ONU side, wherein a pattern of the physical layer synchronization may be a Physical Layer Synchronization (PSync) pattern or another pattern.

The recovery block may be an information code of one of the following: a bit sequence consisting of 0s and 1s or a Pseudo-Random Binary Sequence (PRBS) pattern. The bit sequence consisting of 0s and 1s exhibits a certain regularity, which is conducive to clock recovery. The PRBS pattern is conducive to equalization training.

By sending the recovery block at the tail of the time period outside the predetermined time period within the preset cycle, the recovery block enables the ONU to recover the downstream clock, thereby enabling the ONU to accurately acquire synchronization information.

In a case where the ONU has a good clock holdover capability and/or the time period outside the predetermined time period within the preset cycle is short, the recovery block may not be sent. The case where the time period outside the predetermined time period within the preset cycle is short may specifically refer to a case where the time period for stopping sending the downstream service traffic is short.

In a case where the OLT does not send the recovery block, the ONU uses an upstream sending clock that has entered a holdover state during the suspension of the downstream service, instead of the downstream clock acquired via the downstream service, until the ONU acquires a next Physical Layer Synchronization (PSync).

In this embodiment, entering the power saving mode includes one of: entering an entire-superframe power saving mode, entering a superframe-tail power saving mode, or entering an intra-superframe power saving mode.

Specifically, the OLT may determine a type of the power saving mode to enter based on a magnitude of the traffic of the downstream service and a preset threshold.

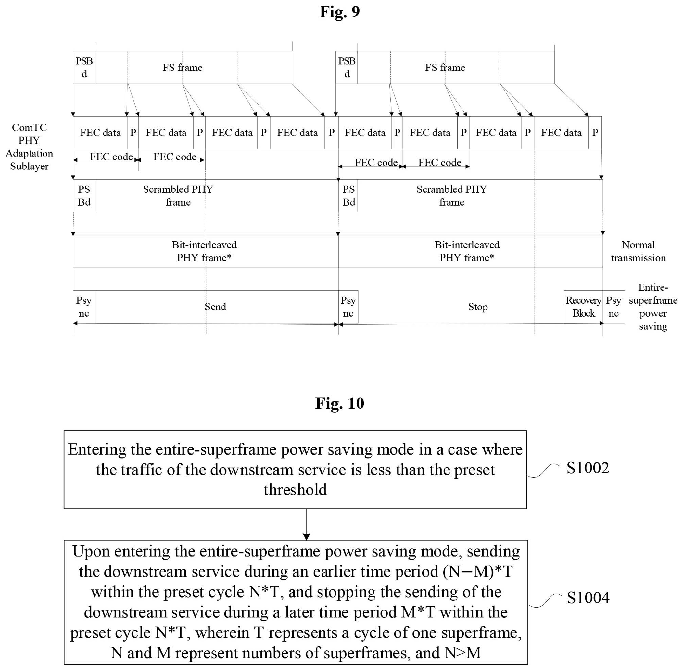

Fig. 9 is a schematic diagram of entering an entire-superframe power saving mode according to an embodiment of the present disclosure. As shown in Fig. 9, to make the power saving behavior repeatable, the entire-superframe power saving mode may be denoted as PSM(N*125, M*125), meaning that a power saving state is entered during the last M*125 microseconds within every N*125 microsecond cycle. Since suspension time period spans several superframes in this mode, downstream service data is buffered for a relatively long time on the OLT side, potentially leading to relatively high latency.

Fig. 10 is a flowchart of entering an entire-superframe power saving mode according to an embodiment of the present disclosure. As shown in Fig. 10, the flow includes the following operations S1002 and S1004.

In operation S1002, the entire-superframe power saving mode is entered in a case where the traffic of the downstream service is less than the preset threshold.

Specifically, the OLT measures the traffic of the downstream service. In a case where the traffic of the downstream service is less than the preset threshold, the OLT determines that the power saving mode is the entire-superframe mode and determines a power saving parameter. The OLT sends the power saving parameter to the ONU via a PLOAM message. After receiving a confirmation message fed back by the ONU, the OLT enters the entire-superframe power saving mode. Upon receiving the power saving parameter, the ONU also enters the entire-superframe power saving mode.

In operation S1004, upon entering the entire-superframe power saving mode, the downstream service is sent during an earlier time period (N-M)*T within the preset cycle N*T, and the sending of the downstream service is stopped during a later time period M*T within the preset cycle N*T, wherein T represents a cycle of one superframe, N and M represent numbers of superframes, and N>M.

The above operation S1004 may specifically include: upon entering the entire-superframe power saving mode, the downstream service is sent in (N-M) superframes among every N superframes, and the sending of the downstream service is stopped in the last M superframes among every N superframes.

Specifically, upon entering the entire-superframe power saving mode, within every N superframes, the OLT resumes operation of local downstream sending-related components to send the downstream service in the (N-M) superframes, and turns off the local downstream sending-related components or controls the local downstream sending-related components to enter a power saving state in the last M superframes.

For example, upon entering the entire-superframe power saving mode, within a cycle of N superframes, the OLT resumes operation of the local downstream sending-related components to send (N-M) superframes, then turns off the local downstream sending-related components to stop sending the following M superframes. In a next cycle, the OLT resumes operation again to send (N-M) superframes, then turns off the local downstream sending-related components to stop sending the following M superframes. This process is repeated until exiting the entire-superframe power saving mode.

After N superframes, the local downstream sending-related components of the OLT need to recover from a turned-off state or a power saving state to a working state. However, when the OLT is in a fully turned-off state or the power saving state, the ONU cannot receive the downstream service from the OLT and thus cannot acquire synchronization information from the downstream service. Therefore, enabling the ONU to acquire accurate synchronization information is a key technical problem.

In this embodiment, stopping the sending of the downstream service during a later time period M*T within the preset cycle N*T includes: within the later time period M*T corresponding to the last M superframes among the N superframes, sending physical layer synchronization at a head of the last M superframes, sending a physical layer synchronization recovery block at a tail of the last M superframes, and stopping the sending of the downstream service during a remaining portion of the later time period M*T.

In this embodiment, a pattern of the physical layer synchronization may be a PSync pattern or another pattern; the physical layer synchronization recovery block may be a PSync recovery block or a recovery block of another pattern.

Specifically, within the last M superframes, the physical layer synchronization (PSync) is sent at the head, and the PSync recovery block is sent at the tail, while the sending of the downstream service is stopped during a remaining portion (i.e., remaining time period), i.e., the local downstream sending-related components are turned off or controlled to enter the power saving state.

The PSync recovery block is used by the ONU to recover the downstream clock and to search for the PSync to maintain a local PSync synchronization state machine.

By sending the physical layer synchronization at the head of the last M superframes and the physical layer synchronization recovery block at the tail of the last M superframes thereby enabling the ONU to accurately acquire synchronization information.

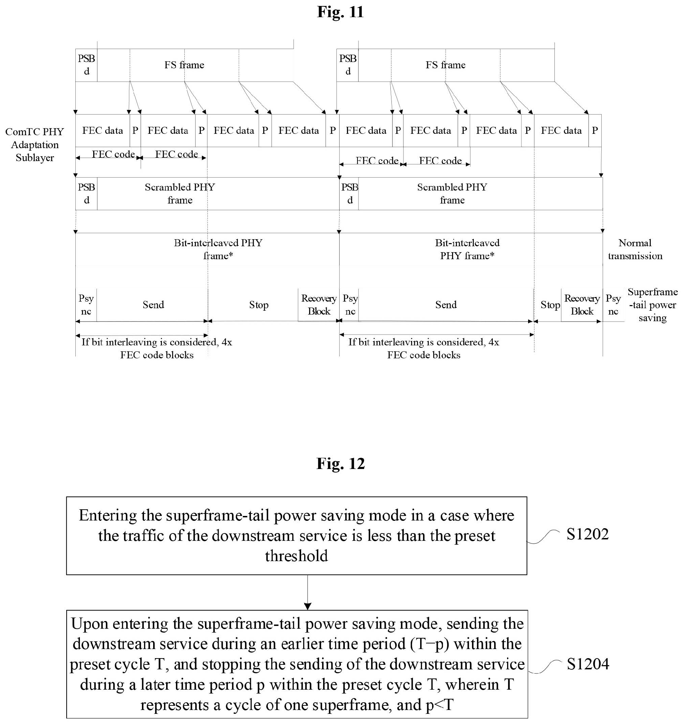

Fig. 11 is a schematic diagram of entering a superframe-tail power saving mode according to an embodiment of the present disclosure. As shown in Fig. 11, the superframe-tail power saving mode may be denoted as PSM(125, p), meaning that a power saving state is entered during a last p microseconds within every 125 microsecond cycle, i.e., the sending is stopped at a tail of one superframe. Since the suspension duration covers only a portion of one superframe in the superframe-tail power saving mode, downstream service data is buffered for a medium duration on the OLT side, leading to medium latency. The power saving effect of the superframe-tail power saving mode is comparable to others, without issues of frame loss of synchronization or state transition, and without requiring additional synchronization headers, while maintaining moderate data buffering latency.

Fig. 12 is a flowchart of entering a superframe-tail power saving mode according to an embodiment of the present disclosure. As shown in Fig. 12, the flow includes the following operations S1202 and S1204.

In operation S1202, a superframe-tail power saving mode is entered in a case where the traffic of the downstream service is less than the preset threshold.

Specifically, the OLT measures the traffic of the downstream service. In a case where the traffic of the downstream service is less than the preset threshold, the OLT determines that the power saving mode is the superframe-tail power saving mode and determines a power saving parameter. The OLT sends the power saving parameter to the ONU via a PLOAM message. After receiving the confirmation message fed back by the ONU, the OLT enters the superframe-tail power saving mode. Upon receiving the power saving parameter, the ONU also enters the superframe-tail power saving mode.

In operation S1204, upon entering the superframe-tail power saving mode, the downstream service is sent during an earlier time period (T-p) within the preset cycle T, and the sending of the downstream service is stopped during a later time period p within the preset cycle T, wherein T represents a cycle of one superframe, and p<T.

The above S1204 may specifically include: upon entering the superframe-tail power saving mode, for each superframe, sending the downstream service during an earlier time period (T-p) within the superframe, and stopping the sending of the downstream service during a later time period p within the superframe.

Specifically, upon entering the superframe-tail power saving mode, for each superframe, the OLT resumes operation of the local downstream sending-related components during the earlier time period (T-p) within the superframe, and turns off the local downstream sending-related components or controls the local downstream sending-related components to enter the power saving state during the later time period p within the superframe.

For example, after an entire cycle, i.e., one superframe, the OLT resumes operation of the local downstream sending-related components to send the downstream service during the earlier time period (T-p) within a superframe, then turns off the local downstream sending-related components to stop sending during the later time period p within this superframe. This process is repeated within the superframe-tail power saving mode.

After one superframe, the local downstream sending-related components of the OLT need to recover from the turned-off state to the working state. Since the ONU cannot accurately acquire synchronization information when the OLT is in the fully turned-off state, enabling the ONU to accurately acquire synchronization information is an important technical problem.

In this embodiment, sending the downstream service during an earlier time period (T-p) within the preset cycle T includes:
within the earlier time period (T-p), sending physical layer synchronization at a head of the superframe, and sending the downstream service during a remaining portion of the earlier time period (T-p). A pattern of the physical layer synchronization may be a PSync pattern or another pattern.

Specifically, within one superframe, during the earlier time period (T-p), the physical layer synchronization (PSync) is sent at the head of the superframe, and the downstream service is sent during the remaining portion of the earlier time period (T-p).

In this embodiment, stopping the sending of the downstream service during a later time period p within the preset cycle T includes:
within the later time period p, sending a physical layer synchronization recovery block at a tail of the superframe, and stopping the sending of the downstream service during a remaining portion of the later time period p. The physical layer synchronization recovery block may be a PSync recovery block or a recovery block of another pattern.

Specifically, for one superframe, during the later time period p, the physical layer synchronization recovery block (PSync recovery block) is sent at the tail of the superframe, and the sending of the downstream service is stopped during a remaining portion of the later time period p, i.e., the local downstream sending-related components are turned off or controlled to enter the power saving state.

The PSync recovery block is used by the ONU to recover the downstream clock and to search for the PSync to maintain the local PSync synchronization state machine.

The physical layer synchronization is sent at the head of the superframe and the physical layer synchronization recovery block is sent at the tail of the superframe, thereby enabling the ONU to accurately acquire synchronization information.

In an embodiment, a number of Forward Error Correction (FEC) code blocks of the downstream service after processing is an integer multiple of four.

Specifically, in the superframe-tail power saving mode, without a coordination mechanism between the OLT and the ONU, considering bit interleaving, the downstream service sent during the predetermined time period within the preset cycle needs to consist of complete FEC code blocks to ensure correct FEC decoding by the ONU. That is, the number of FEC code blocks sent during the earlier time period of one superframe should be an integer multiple of four. If a coordination mechanism exists, this requirement does not apply.

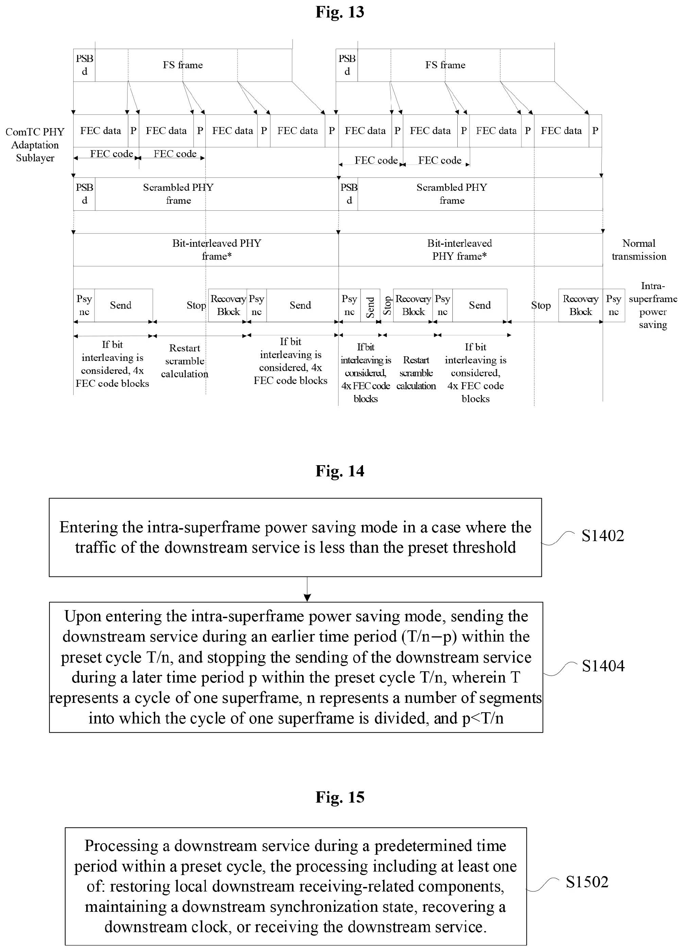

Fig. 13 is a schematic diagram of entering an intra-superframe power saving mode according to an embodiment of the present disclosure. As shown in Fig. 13, when the OLT enters the intra-superframe power saving mode, sending of the downstream service may be stopped within the interior of a superframe. The intra-superframe power saving mode may be denoted as PSM(125/n, p), meaning that a power saving state is entered during a last p microseconds within every 125/n microsecond cycle. Since sending is stopped multiple times within one superframe in the intra-superframe power saving mode, downstream service data is buffered for the shortest duration on the OLT side, leading to minimal latency.

Fig. 14 is a flowchart of entering an intra-superframe power saving mode according to an embodiment of the present disclosure. As shown in Fig. 14, the flow includes the following operations S1402 and S1404.

In operation S1402, an intra-superframe power saving mode is entered in a case where the traffic of the downstream service is less than the preset threshold.

Specifically, the OLT measures the traffic of the downstream service. In a case where the traffic of the downstream service is less than the preset threshold, the OLT determines that the power saving mode is the intra-superframe mode and determines a power saving parameter. The OLT sends the power saving parameter to the ONU via a PLOAM message. After receiving the confirmation message fed back by the ONU, the OLT enters the intra-superframe power saving mode. Upon receiving the power saving parameter, the ONU also enters the intra-superframe power saving mode.

In operation S1404, upon entering the intra-superframe power saving mode, the downstream service is sent during an earlier time period (T/n-p) within the preset cycle T/n, and the sending of the downstream service is stopped during a later time period p within the preset cycle T/n, wherein T represents a cycle of one superframe, n represents a number of segments into which the cycle of one superframe is divided, and p<T/n.

Specifically, upon entering the intra-superframe power saving mode, the OLT divides the cycle of one superframe into n segments, each having a duration of T/n. Within one segment T/n of one superframe, the OLT resumes operation of the local downstream sending-related components during the earlier time period (T/n-p), and turns off the local downstream sending-related components or controls local downstream sending-related components to enter the power saving state during the later time period p.

For example, in the intra-superframe power saving mode, after a duration of T/n within one superframe, the OLT resumes operation of the local downstream sending-related components to send the downstream service during the earlier time period (T/n-p), then turns off local downstream sending-related components to stop sending during the later time period p. This process is repeated within the intra-superframe power saving mode.

After a duration of T/n within one superframe, the local downstream sending-related components of the OLT need to recover from the turned-off state to the working state. Since the ONU cannot accurately acquire synchronization information when the OLT is in the fully turned-off state, enabling the ONU to accurately acquire synchronization information is an important technical problem.

In this embodiment, stopping the sending of the downstream service during a later time period p within the preset cycle T/n includes:
within the later time period p, sending a physical layer synchronization recovery block at a tail of the later time period p, and stopping the sending of the downstream service during a remaining portion of the later time period p. The physical layer synchronization recovery block may be a PSync recovery block or a recovery block of another pattern.

In this embodiment, sending the downstream service during an earlier time period (T/n-p) within the preset cycle T/n includes:
within the earlier time period (T/n-p), sending physical layer synchronization at a head of the earlier time period (T/n-p), and sending the downstream service during a remaining portion of the earlier time period (T/n-p). A pattern of the physical layer synchronization may be a PSync pattern or another pattern.

The PSync recovery block is used by the ONU to recover the downstream clock and to search for the PSync to maintain the local PSync synchronization state machine.

The physical layer synchronization is sent at the head and the physical layer synchronization recovery block is sent at the tail, thereby enabling the ONU to accurately acquire synchronization information.

In an embodiment, a number of Forward Error Correction (FEC) code blocks of the downstream service after processing is an integer multiple of four.

Specifically, in the intra-superframe power saving mode, considering bit interleaving, to ensure correct FEC decoding by the ONU, the downstream service sent during the predetermined time period within the preset cycle needs to consist of complete FEC code blocks. That is, the number of FEC code blocks sent during the earlier time period of one cycle should be an integer multiple of four.

In this embodiment, the physical layer synchronization (PSync) may be replaced by another code.

Scrambling calculation starts at the start of the cycle T. Scrambling calculation also needs to restart at the start of each cycle T/n. When the start times of the cycle T and the cycle T/n do not coincide, the physical layer synchronization (PSync) may be replaced by another code pattern.

For example, T=125 microseconds; scrambling calculation restarts at the start of every 125 microseconds and also at the start of every 125/n microseconds. When the start of 125/n microseconds does not coincide with the start of 125 microseconds, the synchronization header may be replaced by another code pattern.

Through the above embodiments of the present disclosure, the problem of unnecessary power consumption in downstream transmission of an OLT in related technologies is solved, achieving the effect of OLT power saving.

The following illustrates an example of the OLT power saving effect. Taking a superframe as a unit, when the downstream service is at full load, the OLT downlink sending is in a normal working state, continuously sending downstream superframes. Components such as the OLT MAC, the DSP, and the optical devices are at full load throughout the superframe cycle, with a power consumption assumed to be w. When there is no downstream service, a superframe consists basically of PSync and recovery blocks; the time for sending PSync and the recovery block is negligible compared to the power saving cycle. Therefore, it can be considered that the entire power saving cycle is in a power saving state, with a sending power approaching zero. When there is partial downstream service running, assuming a ratio of 50%, the power saving time within one power saving cycle is close to 50%, resulting in a power consumption of w/2. Assuming an overall power saving model where the OLT operates at full load for 8 hours a day, at a 50% power saving state for 8 hours, and at a full power saving state for 8 hours, the average daily power consumption is reduced from w to w/2, achieving an approximate power saving efficiency of 50%.

In an embodiment, a service sending method for an OLT is provided. The method is performed by an ONU. Fig. 15 is a second flowchart of a service sending method for an OLT according to an embodiment of the present disclosure. As shown in Fig. 15, the flow includes the following operation S1502.

In operation S1502, a downstream service is processed during a predetermined time period within a preset cycle, the processing including at least one of: restoring local downstream receiving-related components, maintaining a downstream synchronization state, recovering a downstream clock, or receiving the downstream service.

In this embodiment, the method further includes:
stopping receiving the downstream service outside the predetermined time period within the preset cycle.

In this embodiment, stopping receiving the downstream service outside the predetermined time period within the preset cycle includes:
turning off the local downstream receiving-related components outside the predetermined time period within the preset cycle.

In this embodiment, recovering the downstream clock includes:
receiving a recovery block at a tail of a time period outside the predetermined time period within the preset cycle, wherein the recovery block is used to recover the downstream clock.

The recovery block is further used for at least one of: locking a gain of a Transimpedance Amplifier (TIA), performing equalization training, or searching for Physical Layer Synchronization (PSync).

In an implementation, in a case where the ONU has a good clock holdover capability, an upstream sending clock in a holdover state is used to replace the downstream clock recovered via the downstream service, until a next PSync is acquired.

In this embodiment, before processing the downstream service during the predetermined time period within the preset cycle, the method further includes:
receiving a power saving parameter sent by the OLT, wherein the power saving parameter includes the preset cycle and further includes at least one of a power saving time period or a power saving ratio, wherein the power saving time period is a time period outside the predetermined time period within the preset cycle, and the power saving ratio is a ratio of the power saving time period to the preset cycle; and
feeding back a confirmation message to the OLT, wherein the confirmation message is used to indicate the OLT to enter a power saving mode.

In this embodiment, in a case where the received power saving parameter includes the power saving ratio, the power saving time period may be obtained by multiplying the preset cycle by the power saving ratio.

In this embodiment, processing the downstream service during the predetermined time period within the preset cycle includes:
determining a type of the power saving mode according to the preset cycle T1 and the power saving time period p, wherein the type of the power saving mode includes one of: an entire-superframe power saving mode, a superframe-tail power saving mode, or an intra-superframe power saving mode;
in a case where the type of the power saving mode is the entire-superframe power saving mode, within the preset cycle T1:
   during the last M superframes among N superframes in the preset cycle T1, recovering the downstream clock by using a physical layer synchronization recovery block and identifying physical layer synchronization to maintain a local synchronization state machine; and
   during an earlier time period (T1-p) of the preset cycle T1, restoring the local downstream receiving-related components and receiving earlier (N-M) superframes among the N superframes in the preset cycle T1, wherein N=T1/T, M=p/T, and T is a cycle of one superframe;
in a case where the type of the power saving mode is the superframe-tail power saving mode, within the preset cycle T1:
   during a later time period p at a tail of one superframe in the preset cycle T1, recovering the downstream clock by using a physical layer synchronization recovery block and identifying physical layer synchronization to maintain a local PSync synchronization state machine; and
   during an earlier time period (T1-p) of the superframe in the preset cycle T1, restoring the local downstream receiving-related components and receiving data of the earlier time period (T1-p) of the superframe, wherein T1=T, and T is a cycle of one superframe;
in a case where the type of the power saving mode is the intra-superframe power saving mode, within the preset cycle T1:
   during a later time period p of the preset cycle T1, recovering the downstream clock by using a physical layer synchronization recovery block and identifying physical layer synchronization to maintain a local synchronization state machine; and
during an earlier time period (T1-p) of the preset cycle T1, restoring the local downstream receiving-related components and receiving data of the earlier time period (T1-p), wherein T1=T/n, T is a cycle of one superframe, n represents a number of segments into which the cycle of one superframe is divided, and p<T/n.

In this embodiment, one of the following is set as an upstream sending clock: the downstream clock, a local clock, or an upstream sending clock in a holdover state during a stopping time period of the downstream service.

In this embodiment, in a normal working mode, the downstream clock is set as the upstream sending clock.

Specifically, in the normal working mode, i.e., a non-power-saving mode, the downstream clock is acquired from the received downstream service and used as the upstream sending clock.

Since the ONU uses the downstream clock as the upstream sending clock to send upstream service, a frequency deviation between a clock frequency of the OLT and a clock frequency received by the OLT is relatively small, which facilitates reception by the OLT. When the ONU uses the upstream sending clock in the holdover state or the local clock to send the upstream service, a relatively large frequency deviation occurs between the clock frequency sent by the ONU and the clock frequency received by the OLT, which is unfavorable for reception by the OLT.

To reduce the frequency deviation, the upstream sending clock needs to be appropriately set.

In this embodiment, setting the upstream sending clock includes:
upon entering the power saving mode, setting the downstream clock as the upstream sending clock during the predetermined time period within the preset cycle, and setting one of the following as the upstream sending clock during a time period outside the predetermined time period within the preset cycle: the upstream sending clock in the holdover state, or the local clock.

Setting the upstream sending clock in the holdover state as the upstream sending clock includes: in a case of entering the power saving mode, upon the OLT stopping sending the downstream service, entering the holdover state of the upstream sending clock, and upon the ONU sending the upstream service, setting the upstream sending clock in the holdover state as the upstream sending clock.

In this embodiment, setting the upstream sending clock further includes one of:
setting the local clock as the upstream sending clock in a case where the OLT enters the power saving mode;
setting the downstream clock as the upstream sending clock in a case where the downstream clock is acquired;
setting the upstream sending clock in the holdover state as the upstream sending clock in a case where the downstream clock cannot be acquired;
setting the upstream sending clock in the holdover state or the local clock as the upstream sending clock upon completion of a burst transmission using the recovered downstream clock.

It will be apparent to those having ordinary skill in the art that the methods according to the above embodiments may be implemented by software plus a necessary universal hardware platform, and may also be implemented by hardware in many cases, although the former is a preferred implementation. Based on this understanding, the technical solution of the present disclosure, or the part contributing to the related art, may be embodied in the form of a software product. The computer software product is stored in a storage medium (e.g., ROM/RAM, a magnetic disk, or an optical disk) and includes several instructions to cause a terminal device (which may be a mobile phone, a computer, a server, network equipment, or the like) to perform the methods described in the various embodiments of the present disclosure.

The embodiments of the present disclosure further provide a computer-readable storage medium storing a computer program, wherein the computer program is configured to, when executed, perform the operations in any one of the foregoing method embodiments.

In an exemplary embodiment, the computer-readable storage medium may include, but is not limited to: a USB flash drive, a Read-Only Memory (ROM), a Random Access Memory (RAM), a mobile hard disk, a magnetic disk, an optical disk, or any other medium capable of storing a computer program.

The embodiments of the present disclosure further provide an electronic apparatus, including a memory and a processor, wherein a computer program is stored in the memory, and the processor is configured to run the computer program to perform the operations in any one of the foregoing method embodiments.

In an exemplary embodiment, the electronic apparatus may further include a transmission device and an input/output device, wherein the transmission device is connected to the processor, and the input/output device is connected to the processor.

For specific examples in this embodiment, reference may be made to the examples described in the foregoing embodiments and exemplary implementations, and details are not repeated herein.

Obviously, those having ordinary skill in the art should understand that the various modules or steps of the present disclosure may be implemented by a general-purpose computing apparatus. They may be centralized on a single computing apparatus or distributed across a network composed of multiple computing apparatuses. They may be implemented by program code executable by the computing apparatus. Consequently, they may be stored in a storage apparatus and executed by the computing apparatus, or they may be fabricated into individual integrated circuit modules, or multiple modules or steps may be fabricated into a single integrated circuit module for implementation. Thus, the present disclosure is not limited to any specific combination of hardware and software.

The foregoing descriptions are merely preferred embodiments of the present disclosure and are not intended to limit the present disclosure. Various modifications and variations may occur to those having ordinary skill in the art. Any modification, equivalent replacement, or improvement made within the principles of the present disclosure shall be included within the protection scope of the present disclosure.

## Claims

1. A service sending method for an Optical Line Terminal, OLT, applied to the OLT and comprising:
sending a downstream service during a predetermined time period within a preset cycle, and stopping the sending of the downstream service outside the predetermined time period within the preset cycle.

2. The method according to claim 1, wherein stopping the sending of the downstream service outside the predetermined time period within the preset cycle comprises:
turning off local downstream sending-related components outside the predetermined time period within the preset cycle, or controlling the local downstream sending-related components to enter a power saving state outside the predetermined time period within the preset cycle.

3. The method according to claim 1, wherein sending a downstream service during a predetermined time period within a preset cycle, and stopping the sending of the downstream service outside the predetermined time period within the preset cycle comprises:
entering a power saving mode in a case where a traffic of the downstream service is less than a preset threshold; and
upon entering the power saving mode, sending the downstream service during the predetermined time period within the preset cycle, and stopping the sending of the downstream service outside the predetermined time period within the preset cycle.

4. The method according to claim 3, further comprising:
determining a power saving time period or a power saving ratio based on a magnitude of the traffic of the downstream service, wherein the power saving time period is a time period outside the predetermined time period within the preset cycle, and the power saving ratio is a ratio of the power saving time period to the preset cycle.

5. The method according to claim 3, wherein, before entering a power saving mode, the method further comprises:
configuring a First-In-First-Out, FIFO, buffer, wherein the FIFO buffer is configured to adjust a deviation between a local clock and an upstream sending clock of an Optical Network Unit, ONU.

6. The method according to claim 4, wherein entering a power saving mode comprises:
sending a power saving parameter to an Optical Network Unit, ONU; and
entering the power saving mode after receiving a confirmation message fed back by the ONU.

7. The method according to claim 6, wherein the power saving parameter comprises the preset cycle, and further comprises at least one of the power saving time period or the power saving ratio.

8. The method according to claim 1, wherein stopping the sending of the downstream service outside the predetermined time period within the preset cycle comprises:
sending a recovery block at a tail of a time period outside the predetermined time period within the preset cycle, and stopping the sending of the downstream service during a remaining portion of the time period outside the predetermined time period within the preset cycle, wherein the recovery block is used by an Optical Network Unit, ONU, to recover a downstream clock.

9. The method according to any one of claims 3 to 8, wherein entering a power saving mode in a case where a traffic of the downstream service is less than a preset threshold, and upon entering the power saving mode, sending the downstream service during the predetermined time period within the preset cycle, and stopping the sending of the downstream service outside the predetermined time period within the preset cycle comprises:
entering an entire-superframe power saving mode in a case where the traffic of the downstream service is less than the preset threshold;
upon entering the entire-superframe power saving mode, sending the downstream service during an earlier time period (N-M)*T within the preset cycle N*T, and stopping the sending of the downstream service during a later time period M*T within the preset cycle N*T,
wherein T represents a cycle of one superframe, N and M represent numbers of superframes, and N>M.

10. The method according to claim 9, wherein stopping the sending of the downstream service during a later time period M*T within the preset cycle N*T comprises:
within the later time period M*T corresponding to the last M superframes among the N superframes, sending physical layer synchronization at a head of the last M superframes, sending a physical layer synchronization recovery block at a tail of the last M superframes, and stopping the sending of the downstream service during a remaining portion of the later time period M*T.

11. The method according to any one of claims 3 to 8, wherein entering a power saving mode in a case where a traffic of the downstream service is less than a preset threshold, and upon entering the power saving mode, sending the downstream service during the predetermined time period within the preset cycle, and stopping the sending of the downstream service outside the predetermined time period within the preset cycle comprises:
entering a superframe-tail power saving mode in a case where the traffic of the downstream service is less than the preset threshold;
upon entering the superframe-tail power saving mode, sending the downstream service during an earlier time period (T-p) within the preset cycle T, and stopping the sending of the downstream service during a later time period p within the preset cycle T, wherein T represents a cycle of one superframe, and p<T.

12. The method according to claim 11, wherein stopping the sending of the downstream service during a later time period p within the preset cycle T comprises:
within the later time period p, sending a physical layer synchronization recovery block at a tail of the superframe, and stopping the sending of the downstream service during a remaining portion of the later time period p.

13. The method according to claim 11, wherein sending the downstream service during an earlier time period (T-p) within the preset cycle T comprises:
within the earlier time period (T-p), sending physical layer synchronization at a head of the superframe, and sending the downstream service during a remaining portion of the earlier time period (T-p).

14. The method according to any one of claims 3 to 8, wherein entering a power saving mode in a case where a traffic of the downstream service is less than a preset threshold, and upon entering the power saving mode, sending the downstream service during the predetermined time period within the preset cycle, and stopping the sending of the downstream service outside the predetermined time period within the preset cycle comprises:
entering an intra-superframe power saving mode in a case where the traffic of the downstream service is less than the preset threshold;
upon entering the intra-superframe power saving mode, sending the downstream service during an earlier time period (T/n-p) within the preset cycle T/n, and stopping the sending of the downstream service during a later time period p within the preset cycle T/n,
wherein T represents a cycle of one superframe, n represents a number of segments into which the cycle of one superframe is divided, and p<T/n.

15. The method according to claim 14, wherein stopping the sending of the downstream service during a later time period p within the preset cycle T/n comprises:
within the later time period p, sending a physical layer synchronization recovery block at a tail of the later time period p, and stopping the sending of the downstream service during a remaining portion of the later time period p.

16. The method according to claim 14, wherein sending the downstream service during an earlier time period (T/n-p) within the preset cycle T/n comprises:
within the earlier time period (T/n-p), sending physical layer synchronization at a head of the earlier time period (T/n-p), and sending the downstream service during a remaining portion of the earlier time period (T/n-p).

17. The method according to claim 14, wherein a number of Forward Error Correction, FEC, code blocks of the downstream service after processing is an integer multiple of four.

18. The method according to claim 2, wherein the local downstream sending-related components comprise at least one of:
a Medium Access Controller, MAC, component of a data link layer, a Digital Signal Processor, DSP, component, a Serializer/Deserializer, SERDES, component, a Physical Layer, PHY, component, or an optical device component.

19. A service sending method for an Optical Line Terminal, OLT, applied to an Optical Network Unit, ONU, and comprising:
processing a downstream service during a predetermined time period within a preset cycle, the processing comprising at least one of: restoring local downstream receiving-related components, maintaining a downstream synchronization state, recovering a downstream clock, or receiving the downstream service.

20. The method according to claim 19, further comprising:
stopping receiving the downstream service outside the predetermined time period within the preset cycle.

21. The method according to claim 20, wherein stopping receiving the downstream service outside the predetermined time period within the preset cycle comprises:
turning off the local downstream receiving-related components outside the predetermined time period within the preset cycle, or controlling the local downstream receiving-related components to enter a power saving state outside the predetermined time period within the preset cycle.

22. The method according to any one of claims 19 to 21, wherein one of the following is set as an upstream sending clock:
the downstream clock, a local clock, or an upstream sending clock in a holdover state during a stopping time period of the downstream service.

23. The method according to claim 19, wherein before processing a downstream service during a predetermined time period within a preset cycle, the method further comprises:
receiving a power saving parameter sent by the OLT, wherein the power saving parameter comprises the preset cycle and further comprises at least one of a power saving time period or a power saving ratio, wherein the power saving time period is a time period outside the predetermined time period within the preset cycle, and the power saving ratio is a ratio of the power saving time period to the preset cycle; and
feeding back a confirmation message to the OLT, wherein the confirmation message is used to indicate the OLT to enter a power saving mode.

24. The method according to claim 19, wherein recovering a downstream clock comprises:
receiving a recovery block at a tail of a time period outside the predetermined time period within the preset cycle, wherein the recovery block is used to recover the downstream clock.

25. The method according to claim 23, wherein processing a downstream service during a predetermined time period within a preset cycle comprises:
determining a type of the power saving mode according to the preset cycle T1 and the power saving time period p, wherein the type of the power saving mode comprises one of: an entire-superframe power saving mode, a superframe-tail power saving mode, or an intra-superframe power saving mode;
in a case where the type of the power saving mode is the entire-superframe power saving mode, within the preset cycle T1:
during the last M superframes among N superframes in the preset cycle T1, recovering the downstream clock by using a physical layer synchronization recovery block and identifying physical layer synchronization to maintain a local synchronization state machine; and
during an earlier time period (T1-p) of the preset cycle T1, restoring the local downstream receiving-related components and receiving earlier (N-M) superframes among the N superframes in the preset cycle T1, wherein N=T1/T, M=p/T, and T is a cycle of one superframe;
in a case where the type of the power saving mode is the superframe-tail power saving mode, within the preset cycle T1:
during a later time period p at a tail of one superframe in the preset cycle T1, recovering the downstream clock by using a physical layer synchronization recovery block and identifying physical layer synchronization to maintain a local PSync synchronization state machine; and
during an earlier time period (T1-p) of the superframe in the preset cycle T1, restoring the local downstream receiving-related components and receiving data of the earlier time period (T1-p) of the superframe, wherein T1=T, and T is a cycle of one superframe;
in a case where the type of the power saving mode is the intra-superframe power saving mode, within the preset cycle T1:
during a later time period p of the preset cycle T1, recovering the downstream clock by using a physical layer synchronization recovery block and identifying physical layer synchronization to maintain a local synchronization state machine; and
during an earlier time period (T1-p) of the preset cycle T1, restoring the local downstream receiving-related components and receiving data of the earlier time period (T1-p), wherein T1=T/n, T is a cycle of one superframe, n represents a number of segments into which the cycle of one superframe is divided, and p<T/n.

26. A computer-readable storage medium storing a computer program, wherein the computer program, when executed by a processor, causes the processor to perform the operations of the method according to any one of claims 1 to 25.

27. An electronic apparatus, comprising a memory and a processor, wherein the memory stores a computer program executable on the processor, and the processor, when executing the computer program, performs the operations of the method according to any one of claims 1 to 25.
